# EUROPEAN PATENT APPLICATION

(11) **EP 3 023 767 A1**
(43) Date of publication of application: **25.05.2016**
(21) Application number: 15184237.4
(22) Date of filing: 08.09.2015
(51) Int. Cl.: G01N 21/03, G01N 21/35, G01J 3/02, G01J 3/42, G01N 33/00, G01N 21/45, G02B 5/08, G01N 21/3504, G01N 21/3577, G01N 21/05, G01N 21/61

(54) **INTERFEROMETER DEVICE FOR SENSING A SUBSTANCE, AND METHOD OF MANUFACTURE THEREOF**

(30) Priority: 19.11.2014 US 201414547908
(71) Applicant: NXP B.V., 5656 AG Eindhoven (NL)
(72) Inventor: Oldsen, Marten, Redhill, Surrey RH1 1SH (GB); Lous, Erik Jan, Redhill, Surrey RH1 1SH (GB); Sakic, Agata, Redhill, Surrey RH1 1SH (GB)
(74) Representative: Crawford, Andrew

(57) **Abstract**

One example discloses an interferometer device (100), including: a first side (102), having a first reflectivity (104); a second side (106), having a second reflectivity (108); a cavity (110) disposed between the first and second sides, and having an opening (112) configured to receive a substance (114), such as carbon dioxide; an electromagnetic source input region (116) configured to receive an electromagnetic signal(118); and an electromagnetic detector output region (122) configured to output the electromagnetic signal (124) modulated in response to the substance in the cavity. Another example discloses a method including: fabricating a first side, having a first reflectivity; fabricating a second side, having a second reflectivity and positioned with respect to the first side so as to form a cavity; fabricating an opening configured to receive a substance; fabricating an electromagnetic source input region configured to receive an electromagnetic signal; and fabricating an electromagnetic detector output region configured to output the electromagnetic signal modulated in response to the substance in the cavity. Preferably, the first side, the second side and the cavity form a Fabry-Perot etalon.

## Description

Various example embodiments of systems, methods, apparatuses, devices and articles of manufacture for gas sensors are now discussed.

Environmental gas sensors measure gas concentrations in various environments. One example of an environmental gas sensor is a Non-dispersive infrared (NDIR) gas sensor that measures gas concentrations in air. Light of an IR light source is directed through a tube that contains the gas mixture to be measured.

Depending on the concentration of the gas species to be measured, the IR light is being partly absorbed while passing through the tube. At the other end of the tube, an optical filter eliminates every wavelength of remaining light except the exact wavelength absorbed by the selected gas species. After filtering, a detector reads the amount of remaining light. The filter in the NDIR sensor needs to be adapted to the wavelengths of the gas to be measured.

NDIR sensors are able to measure gas concentrations with very high sensitivities. However, such NDIR sensors also tend to be large, typically in the order of several centimeters, due to a long optical path required to reach these sensitivities. This hinders further miniaturization and integration in, for example, mobile devices.

Another example of an environmental gas sensor is a Thermal conductivity (TC) gas sensor, also known as a hot wire detector. Thermal conductivity (TC) sensors operate on a principle that gases differ in their ability to conduct heat. This property is used for measuring gas concentration in mixtures where component gases have different thermal conductivity. An example configuration of these sensors consists of a heating element and a sensing element, although the heater and the sensing element can be the same. The sensor consists of a filament of platinum or tungsten in contact with the gas and heated by an electrical current.

A thermal conductivity sensor is generally smaller than an optical NDIR gas sensor, but generally has a lower detection sensitivity than the NDIR.

### SUMMARY

Example embodiments of an environmental sensor having a reduced length compared to an NDIR sensor and an increased sensitivity compared to a thermal conductivity sensor are now discussed. In some examples the environmental sensor's device footprint can be reduced from an NDIR's centimeter scale structure to a CMOS wafer micrometer scale structure.

In one example embodiment the environmental sensor includes an optical element that combines a separate NDIR optical path and a separate optical filter into a single component. The single component is a Fabry-Perot-Etalon/Interferometer (FPE) having a cavity open to a gas to be measured. In one example, this achieves a high environmental substance (e.g. gas) sensitivity of an FPE, but with a smaller package size than an NDIR. This single component combination replaces an NDIR's long tube and separate optical filter.

Herein defined within the specification an etalon is a species of the genus interferometer, wherein the etalon has a fixed distance between reflective surfaces, while the interferometer has either a fixed or an adjustable distance between the reflective surfaces. Example embodiments include interferometer devices and etalon devices.

In one example embodiment a Fabry-Pérot interferometer or etalon is made of a transparent plate with two reflecting surfaces, or two parallel highly reflecting mirrors. In such embodiments, the structure with the transparent plate and with two reflecting surfaces is an etalon, and two parallel highly reflecting mirrors make an interferometer. In example embodiments, the Fabry-Pérot interferometer is a pair of two partially reflective glass optical flats spaced microns to centimeters apart, with the reflective surfaces facing each other. In another embodiment the Fabry-Pérot *etalon* uses a single plate with two parallel reflecting surfaces.

In an example embodiment, an interferometer device, comprises: a first side, having a first reflectivity; a second side, having a second reflectivity; a cavity within the interferometer and disposed between the first and second sides, and having an opening configured to receive a substance; an electromagnetic source input region configured to receive an electromagnetic signal; and an electromagnetic detector output region configured to output the electromagnetic signal modulated in response to the substance in the cavity.

In an example embodiment, the first side, the second side and the cavity form a Fabry-Perot etalon.

In an example embodiment, the source input region and detector output region are on opposite sides of the interferometer.

In an example embodiment, the source input region and detector output region are on a same side of the cavity.

In an example embodiment, a reflectivity of the same side is less than a reflectivity of an opposite side of the cavity.

In an example embodiment, further comprising: an electromagnetic source coupled provide the electromagnetic signal to the electromagnetic source input region; and an electromagnetic detector coupled to receive the modulated electromagnetic signal from the electromagnetic detector output region.

In an example embodiment, the opening is configured to receive at least one of a gas, a vapor, a liquid, molecules or particles from an external environment.

In an example embodiment, the electromagnetic signal frequency is within an infra-red portion of the electromagnetic spectrum.

In an example embodiment, the interferometer includes an optical length based on corresponding reflective coefficients of the first and second sides.

In an example embodiment, at least one of the first side or second side includes a reflective coefficient based on a set of dielectric layers within the side.

In an example embodiment, the first side reflects a first portion of the electromagnetic signal to the second side and the second side reflects a second portion of the electromagnetic signal to the first side.

In an example embodiment, the interferometer is coupled to at least one of: a mobile device, a smartphone, a tablet, a smart watch, a wearable computing device, an automotive device, a flue, an indoor air quality monitor, a greenhouse, a hazardous area, a gas leak detection system, a landfill monitoring device, an alcohol breathalyzer, an anesthesiology device, a spectroscopic device, a civic infrastructure or a building.

In an example embodiment, a gas sensor, comprises: a first side, having a first reflectivity; a second side, having a second reflectivity; a cavity within the sensor and disposed between the first and second sides, and having an opening configured to receive a substance; an electromagnetic source coupled provide an electromagnetic signal to at least one of the sides; and an electromagnetic detector coupled to receive a modulated electromagnetic signal from at least one of the sides in response to the substance in the cavity.

In an example embodiment, a method of manufacture, for an interferometer, comprises: fabricating a first side, having a first reflectivity; fabricating a second side, having a second reflectivity and positioned with respect to the first side so as to form a cavity within the interferometer; fabricating an opening in the interferometer configured to receive a substance; fabricating an electromagnetic source input region on the interferometer configured to receive an electromagnetic signal; and fabricating an electromagnetic detector output region on the interferometer configured to output the electromagnetic signal modulated in response to the substance in the cavity.

In an example embodiment, positioning the first side, the second side and the cavity to form a Fabry-Perot etalon.

In an example embodiment, fabricating an opening in the second side configured to receive the substance.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings, in which:

### BRIEF DESCRIPTION OF THE DRAWINGS

Figure 1 is a first example etalon/interferometer device.
Figure 2 is an example layered structure within the etalon/interferometer device.
Figure 3 is a second example etalon/interferometer device.
Figure 4 is a third example etalon/interferometer device.
Figure 5 is an example set of intermediate structures created during manufacture of an etalon/interferometer device.
Figure 6 is an example graph comparing etalon/interferometer devices having an integer number (N) of layered structures.
Figure 7 is an example method for manufacturing an etalon/interferometer device.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

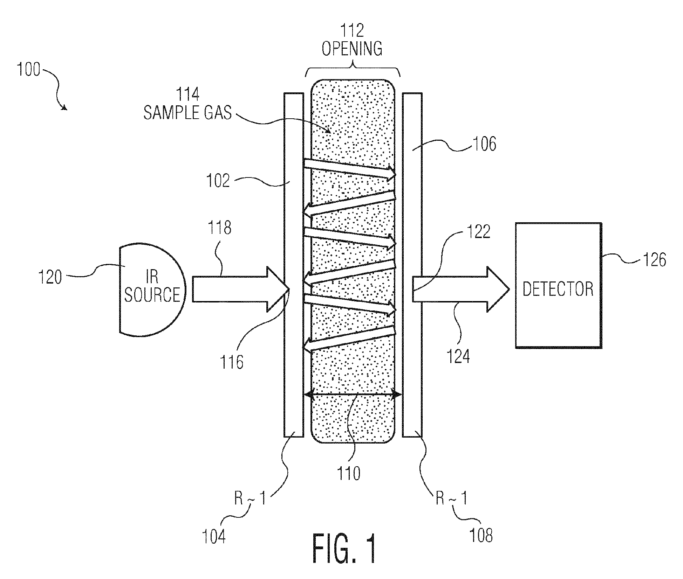

Figure 1 is a first example etalon/interferometer device 100. In various embodiments, the interferometer 100 is embedded within: a mobile device, a smartphone, a tablet, a smart watch, a wearable computing device, an automotive device, a flue, an indoor air quality monitor, a greenhouse, a hazardous area, a gas leak detection system, a landfill monitoring device, an alcohol breathalyzer, an anesthesiology device, a spectroscopic device, a civic infrastructure, a building or a HABA (Home Automation Building Automation Applications).

The interferometer 100 includes a first side 102 having a first reflectivity 104 (e.g. R~1) and a second side 106 having a second reflectivity 108 (e.g. also R~1 in this example). Positioning of the first and second sides 102, 106 forms a cavity 110. The mirror stack around the cavity can have, but is not limited to, plane-symmetrical implementation. An opening 112 in the cavity 110 permits a substance 114 (e.g. a sample CO2 gas) to be received. The substance 114 is received from an environment external to the etalon 100. In various applications, the received substance 114 is a gas, a vapor, a liquid, a set of molecules or a set of particles; however, the resulting wavelength and device 100 design (materials, layer thickness, etc.) are adjusted depending upon the substance to be detected. As such, the device 100 presents a miniaturized absorption spectroscopy device. Depending upon the substance 114 and the substance's 114 absorption spectrum, a dilution agent may be metered/mixed into the substance 114 so that the resultant absorption characteristics are measurable by the device 100.

The first side 102 includes an electromagnetic source input region 116 for receiving an electromagnetic signal 118 from an electromagnetic source 120. In one example the electromagnetic signal 118 is an infra-red signal, and the electromagnetic source 120 is an infrared source. The second side 106 includes an electromagnetic detector output region 122 which outputs a modulated electromagnetic signal 124 to an electromagnetic detector 126. Thus the electromagnetic signal 118 passes through the interferometer 100 and is thereby modulated by the frequency absorption characteristics of the substance 114.

Example embodiments of the interferometer 100 place either or both the electromagnetic source 120 and the electromagnetic detector 126 at various distances from the interferometer 100. In one example embodiment, the substance 114 is only within the interferometer 100 and does not contact either the electromagnetic source 120 or the electromagnetic detector 126. In another example embodiment, the substance 114 is both within the interferometer 100 and is also in contact with either the electromagnetic source 120 or the electromagnetic detector 126.

A resonant wavelength (λ) of the cavity 110 is matched to an absorption wavelength of a substance 114 to be measured (e.g. for CO2 gas λ is about 4.3µm). More generally, the resonating frequency of the cavity is an integer number (n) of half-wavelengths of the samples gas 114(= n*λ/2). The sides 102, 106 (e.g. mirrors) have a high reflectivity (R) and low absorption (k) (e.g. an imaginary part of a complex refractive index). Incident light from the electromagnetic source 120 including the absorption wavelength of interest passes through the interferometer 100. The interferometer 100 itself acts as a resonator for the incoming light and prolongs the effective length of the resulting optical path.

When the two sides 102, 106 (e.g. mirrors) of the interferometer 100 have high reflectivity, then more energy is stored inside the cavity 110 and the electromagnetic signal 118 (e.g. light) is absorbed multiple times by the substance 114 (e.g. CO2 gas) molecules. Therefore, the sensitivity of the interferometer 100 is related to the reflectivity of two sides 102, 106. The higher the reflectivity of the sides 102, 106 (e.g. mirror) and the lower the damping, then the longer the resulting effective optical path gets. Thus, using the interferometer 100, the overall dimensions of the gas sensor can be reduced to a micrometer scale.

The interferometer 100 can in one example be packaged in an open cavity package such as an LGA with a metal cap, and controlled by an ASIC (Application Specific Integrated Circuit).

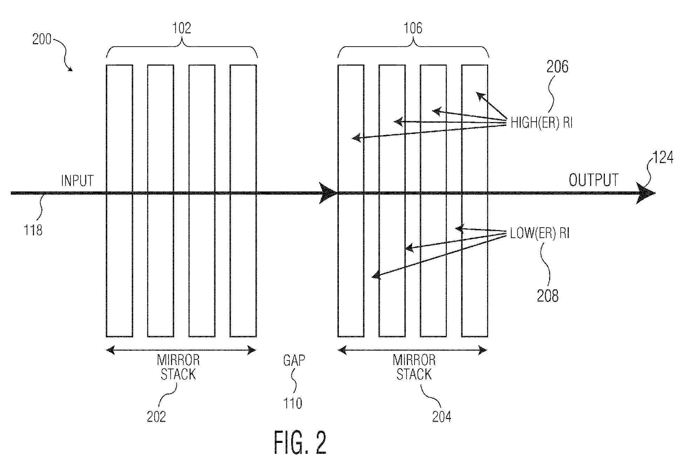

Figure 2 is an example layered structure 200 within the etalon/interferometer device 100. In one example approach for reaching high reflectivity (>99%) and low absorption, the sides 102, 106 (e.g. mirrors) of the interferometer 100 are in one example formed by staggered dielectric bilayers (i.e. thereby forming a Bragg reflector) consisting of nearly identical alternating layers of high and low refractive indices. The number of bilayers corresponds with the reflectivity of dielectric sides 102, 106. Reflectivity of the sides 102, 106 (e.g. mirrors) is related to the high-low refractive index ratio.

Layers of alternating Silicon and Silicon-Dioxide (Si-SiO2) or Germanium and Silicon-Dioxide (Ge-SiO2) having 3 or more bilayers form a good layered structure 200 for infra-red (IR) CO2 gas sensing applications. Layered structures 200 of these dielectric materials show high reflectivity and low absorption at the wavelength of interest for CO2.

In another embodiment, the sides 102, 106 can be formed from metallic mirrors, however, metallic mirrors show a high reflectivity but also high absorption, which leads to a low sensitivity.

In one example the sets of dielectric layers 202, 204 include an odd number of layers, with a high index layer 206 being the first and last of the layers in each set 202, 204. The optical thickness of each layer is about a quarter-wavelength long, and the elementary reflection coefficients of each layer alternate in sign.

Example embodiments having three alternating bilayers of Ge-SiO2 enable the interferometer 100 to modulate the electromagnetic signal 124, based on the concentration of the substance 114 (e.g. CO2), with a fidelity commensurate with that of a larger NDIR sensor. Three bilayers of Si-SiO2 show a similarly high sensitivity. Other example embodiments can use Titanium Dioxide and Silicon-dioxide layered structures 200.

In one example embodiment, the interferometer 100 is tuned to a resonant wavelength of λ=4.25µm or 4.3µm, and includes a 3-stack bilayer of Polycrystalline Si(n=3.6, wherein "n" is the refractive index of poly-Si) and SiO2(n=1.5, wherein "n" is the refractive index of silcon-dioxide) sides 102, 106. The sides 102, 106 include a layer of poly-Si equal to λ/(4*n_poly-Si)=0.30µm and a layer of SiO2 equal to λ/(4*n_SiO2)=0.71µm. The cavity 110 (e.g. central gap) is equal to (1/2)λ=2.13µm and the substrate has a 43 µm thickness. In alternate embodiments other substrate thicknesses can be used, including 750µm, 675µm, 45µm and 43µm. Thicker substrate thicknesses however can be easier to manufacture.

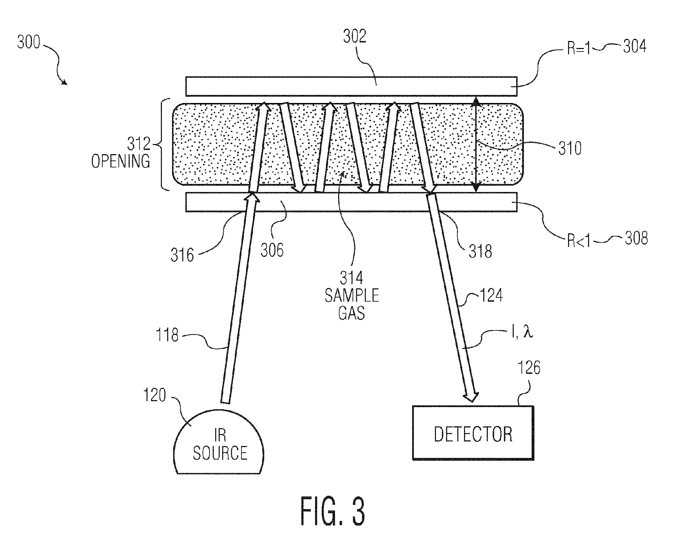

Figure 3 is a second example etalon/interferometer device 300. The interferometer 300 includes a first side 302 having a first reflectivity 304 (e.g. R=1 for a maximum reflectivity) and a second side 306 having a second reflectivity 308 (e.g. R<1 so as to provide an entrance and an exit for the optical path). Positioning of the first and second sides 302, 306 forms a cavity 310. An opening 312 in the cavity 310 permits a substance 314 (e.g. a sample CO2 gas) to be received. The substance 314 is received from a source external to the interferometer 300.

The first side 302, in this example, contains the electromagnetic signal 118 with the first reflectivity 304 (e.g. R close or equal to 1), thereby minimizing leakage of the electromagnetic signal 118 from the first side 302. The second side 306 with the second reflectivity 308 (e.g. R<1) includes an electromagnetic source input region 316 for receiving an electromagnetic signal 118 from an electromagnetic source 120. The second side 306 also includes an electromagnetic detector output region 318 which outputs a modulated electromagnetic signal 124 to an electromagnetic detector 126. As discussed above, in one example the electromagnetic signal 118 is an infra-red signal, and the electromagnetic source 120 is an infra-red source.

Example embodiments of the interferometer 300 place either or both the electromagnetic source 120 and the electromagnetic detector 126 at various distances from the interferometer 300. In one example embodiment, the substance 314 is only within the interferometer 300 and does not contact either the electromagnetic source 120 or the electromagnetic detector 126. In another example embodiment, the substance 314 is both within the interferometer 300 and is also in contact with either the electromagnetic source 120 or the electromagnetic detector 126.

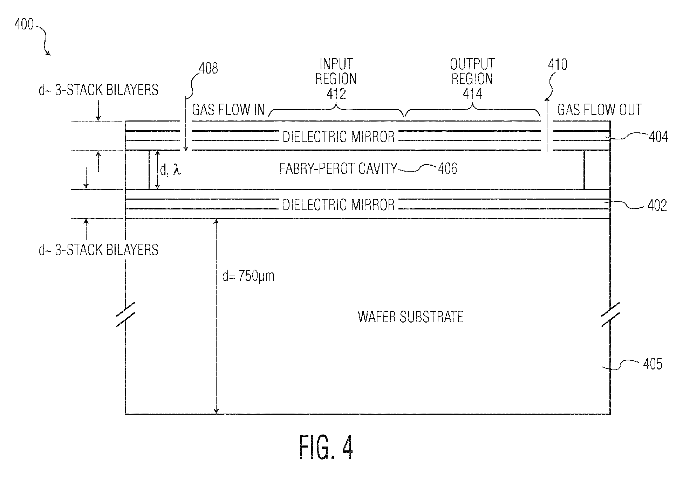

Figure 4 is a third example etalon/interferometer device 400. The third interferometer 400 is a variation of the second interferometer 300 in that the first side 402 has a very high reflectivity (e.g. R=1) and the second side 404 has a reflectivity which is less than then first side 402 (e.g. R<1 so as to provide an entrance and exit for the optical path). In various example embodiments the first side 402 is formed on a substrate 405, which can be fabricated from at least one of: a silicon substance, a polymer, a sapphire substance, a ceramic substance or a carbon based substance. Selection of the substrate 405 is based on how transparent the substrate 405 is to the wavelength of interest.

Positioning of the first and second sides 402, 404 forms a cavity 406 having a height (d) approximately equal to an absorption wavelength (λ) associated with a received substance of interest. The second side 404 includes an input opening 408 for coupling a gas containing the substance of interest to the cavity 406, and an output opening 410 for permitting recirculation of the gas between an environment external to the interferometer 400 and the cavity 406.

The second side 404 also includes an electromagnetic source input region 412 and an electromagnetic detector output region 414 for enabling the cavity 406 to be illuminated by the electromagnetic source 120 and for enabling the electromagnetic detector 126 to detect the modulated electromagnetic signal 124.

In this example interferometer 400, the substrate 405 is wafer silicon, upon which 3-stacks of high refractive index material with germanium (Ge) (or 3-stacks of high refractive index material with silicon (Si)) and low refractive index material with silicon dioxide (SiO2) is deposited to form the first side 402. The second side 404 is similarly formed, except that lower refractive index materials are used. The thickness of the sides 402, 404, the number of stack layers, the angle the light travels through the interferometer (θ), and the cavity 406 dimensions all affect the interferometer's 400 sensitivity for detecting the substance of interest. The angle (θ) selected is based on the dimension of the cavity 406 and the absorption wavelength of the substance of interest. If a different angle (θ) is needed the dimension of the cavity 406 can be adjusted.

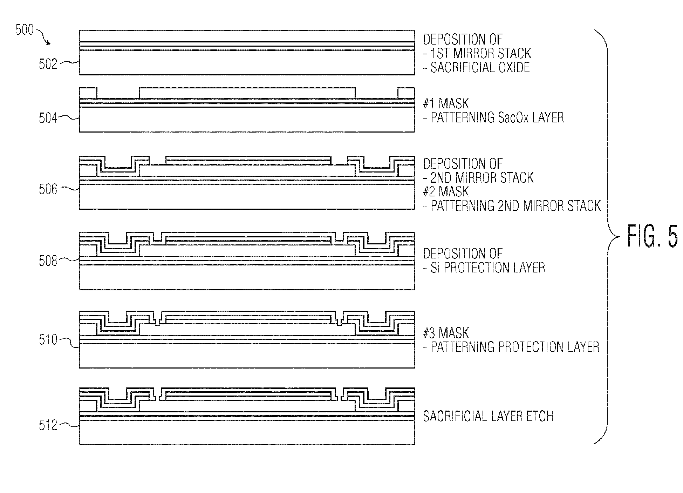

Figure 5 is an example set of intermediate structures 500 created during manufacture of an etalon/interferometer device 100, 300, 400. In this example set 500, fabrication of only one bilayer has been sketched. The first intermediate structure 502 shows deposition of first mirror stack and sacrificial oxide. The second intermediate structure 504 shows a #1 mask patterning sacrificial oxide layer. The third intermediate structure 506 shows deposition of a second mirror stack, along with a #2 mask patterning of the second mirror stack. The fourth intermediate structure 508 shows deposition of a Silicon protection layer. The fifth intermediate structure 510 shows a #3 mask patterning protection layer. The sixth intermediate structure 512 shows a sacrificial layer etch.

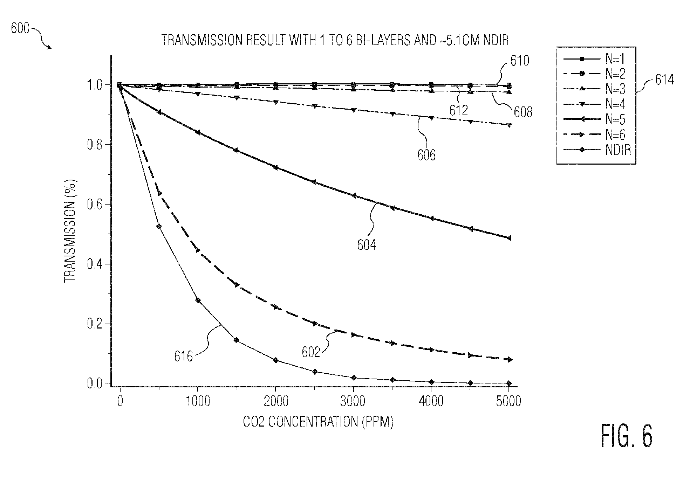

Figure 6 is an example graph 600 comparing etalon/interferometer devices 100, 300, 400 having an integer number (N) of layered structures. Curves 602 through 612 show a calculated modulated electromagnetic signal 124 (e.g. % transmission of the electromagnetic signal 118) through interferometers respectively having six or fewer pairs of dielectric bilayers for different CO2 concentrations in ppm. The legend 614 in Figure 6 maps example values of N with the corresponding calculated % light transmission curves.

Curve 602 shows the calculated modulated electromagnetic signal 124 for an interferometer 100 with six dielectric bilayers. Curve 602 closely corresponds to the light transmission curve 616 of an NDIR gas sensor. Thus when a sufficient number of dielectric bilayers are used for the sides 102, 106 of the interferometer 100, a similar, or perhaps better, depreciation of light intensity as conventional NDIR sensors can be reached.

In various other example embodiments, as N increases the resonant peak of the cavity 110 (d=θ/(2*n)) becomes narrower. Also as N increases, decrease of light transmission becomes significant under different CO2 concentrations. Selection of the thickness of the central cavity 110 in some examples has a greater impact on the light transmission curve than variations in the dielectric bilayers thickness. Absorption of the dielectric bilayers is minimal.

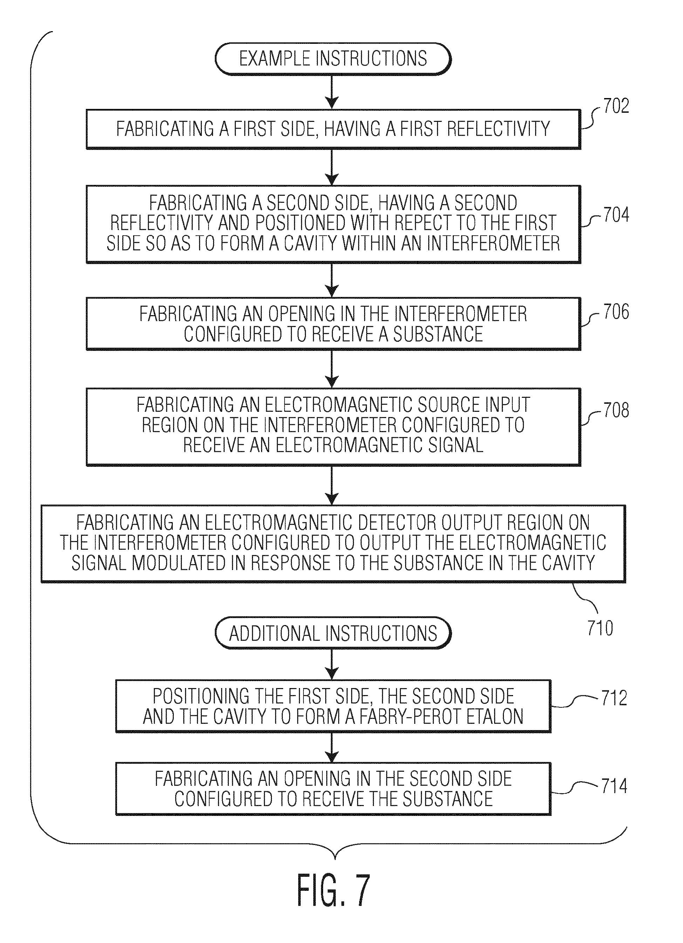

Figure 7 is an example method for manufacturing an etalon/interferometer device. The order in which the method elements are discussed does not limit the order in which other example embodiments implement the elements. Additionally, in some embodiments the elements are implemented concurrently.

A first example method set begins in 702, by fabricating a first side, having a first reflectivity. In 704, fabricating a second side, having a second reflectivity and positioned with respect to the first side so as to form a cavity within the interferometer. In 706, fabricating an opening in the interferometer configured to receive a substance. In 708, fabricating an electromagnetic source input region on the interferometer configured to receive an electromagnetic signal. And in 710, fabricating an electromagnetic detector output region on the interferometer configured to output the electromagnetic signal modulated in response to the substance in the cavity.

The method can be augmented with the following additional elements. The additional elements include: 712 - positioning the first side, the second side and the cavity to form a Fabry-Perot interferometer/etalon; and 714 - fabricating an opening in the second side configured to receive the substance.

The flowchart elements in the above Figures can be executed in any order, unless a specific order is explicitly stated. Also, those skilled in the art will recognize that while one example set of elements has been discussed, the material in this specification can be combined in a variety of ways to yield other examples as well, and are to be understood within a context provided by this detailed description.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An interferometer device, comprising:
a first side, having a first reflectivity;
a second side, having a second reflectivity;
a cavity within the interferometer and disposed between the first and second sides, and having an opening configured to receive a substance;
an electromagnetic source input region configured to receive an electromagnetic signal; and
an electromagnetic detector output region configured to output the electromagnetic signal modulated in response to the substance in the cavity.

2. The interferometer device of claim 1:
wherein the first side, the second side and the cavity form a Fabry-Perot etalon.

3. The interferometer device of claim 1:
wherein the source input region and detector output region are on opposite sides of the interferometer.

4. The interferometer device of claim 1:
wherein the source input region and detector output region are on a same side of the cavity.

5. The interferometer device of claim 4:
wherein a reflectivity of the same side is less than a reflectivity of an opposite side of the cavity.

6. The interferometer device of claim 1, further comprising:
an electromagnetic source coupled to provide the electromagnetic signal to the electromagnetic source input region; and
an electromagnetic detector coupled to receive the modulated electromagnetic signal from the electromagnetic detector output region.

7. The interferometer device of claim 1:
wherein the opening is configured to receive at least one of a gas, a vapor, a liquid, molecules or particles from an external environment.

8. The interferometer device of claim 1:
wherein the electromagnetic signal frequency is within an infra-red portion of the electromagnetic spectrum.

9. The interferometer device of claim 1:
wherein the interferometer includes an optical length based on corresponding reflective coefficients of the first and second sides.

10. The interferometer device of claim 1:
wherein at least one of the first side or second side includes a reflective coefficient based on a set of dielectric layers within the side.

11. The interferometer device of claim 1:
wherein the first side reflects a first portion of the electromagnetic signal to the second side and the second side reflects a second portion of the electromagnetic signal to the first side.

12. The interferometer device of claim 1:
wherein the interferometer is coupled to at least one of: a mobile device, a smartphone, a tablet, a smart watch, a wearable computing device, an automotive device, a flue, an indoor air quality monitor, a greenhouse, a hazardous area, a gas leak detection system, a landfill monitoring device, an alcohol breathalyzer, an anesthesiology device, a spectroscopic device, a civic infrastructure or a building.

13. A method of manufacture, for an interferometer, comprises:
fabricating a first side, having a first reflectivity;
fabricating a second side, having a second reflectivity and positioned with respect to the first side so as to form a cavity within the interferometer;
fabricating an opening in the interferometer configured to receive a substance;
fabricating an electromagnetic source input region on the interferometer configured to receive an electromagnetic signal; and
fabricating an electromagnetic detector output region on the interferometer configured to output the electromagnetic signal modulated in response to the substance in the cavity.

14. The method of claim 13, further comprising;
positioning the first side, the second side and the cavity to form a Fabry-Perot etalon.

15. The method of claim 13. wherein fabricating the opening includes:
fabricating an opening in the second side configured to receive the substance.
